# EUROPÄISCHE PATENTSCHRIFT

(11) **EP 2 374 735 B1**
(45) Veröffentlichungstag und Bekanntmachung des Hinweises auf die Patenterteilung: **12.06.2013**
(21) Anmeldenummer: 10003875.1
(22) Anmeldetag: 12.04.2010
(51) Int. Cl.: B29C 65/00, B29C 65/12, B29C 65/40, B29C 65/64, B29C 65/66, B65D 88/06, B65D 90/00, B65D 90/08, B65D 90/14

(54) **Tank**
Tank
Réservoir

(43) Veröffentlichungstag der Anmeldung: 12.10.2011
(73) Patentinhaber: Graf Plastics GmbH, 79331 Teningen (DE)
(72) Erfinder: Graf, Otto P., 79331 Teningen (DE)
(74) Vertreter: Grünecker, Kinkeldey, Stockmair & Schwanhäusser

(56) Entgegenhaltungen:
- EP-A1- 1 894 855
- EP-A1- 1 894 857
- EP-A1- 2 113 372
- WO-A2-2005/098390
- DE-A1- 1 953 487
- DE-C1- 19 543 524
- DE-U1- 20 214 119
- FR-A1- 2 688 441
- JP-A- 2004 189 235
- US-A- 4 946 056
- US-A1- 2003 136 789

## Beschreibung

Die Erfindung betrifft einen Tank aus Kunststoff gemäß Oberbegriff des Patentanspruchs 1.

Tanks aus Kunststoff werden beispielsweise in Rotationsgießformen monolithisch bis beispielsweise Fassungsvermögen von etwa 10000 Liter hergestellt, oder als Großtanks mit Fassungsvermögen bis etwa 100000 Liter aus in Spritzgußformen oder Rotationsgießformen hergestellten Tanksegmenten gefügt. Aus Kostengründen wird z.B. eine Wandstärke von nur etwa 8 bis 20 mm gewählt, die im monolithisch gefertigten Tank im Wesentlichen in allen Bereichen etwa gleich ist, und/oder im aus Tanksegmenten gefügten Tank beispielsweise in den Tankböden die Wandstärke größer ist als in dem zylindrischen Bereich des Tanks. Unabhängig von der Bauweise solcher allgemein zylindrischer Tanks ist zumindest ein Tankdom erforderlich, der nicht nur Zugang zum Inneren des Tanks ermöglicht, sondern gegebenenfalls auch zur Installation von Ausstattungskomponenten dient. Die Tanks werden nicht nur zur Regenwassernutzung eingesetzt, sondern auch in der Abwasser- oder Abscheidertechnik, z.B. in Kleinkläranlagen, Benzinabscheidern, Fettabscheidern, oder dergleichen. Die Tanks können auf ein Fundament gesetzt oder als Erdtanks unterirdisch installiert sein, wobei im letzteren Fall der zumindest eine Tankdom im Bodenniveau zugänglich sein kann. Die Domöffnung, meist in der zylindrischen Wand des Tanks, bedeutet aufgrund der notwendigen Größe (zum Beispiel übliche Mannlochgröße) eine erhebliche Schwächung des Tanks in diesem Bereich. Es ist bekannt, die Domöffnung formtechnisch etwas stabiler auszubilden. Alternativ oder additiv im Bereich der Tanköffnung zur Aussteifung deutlich höhere Wandstärke vorzusehen, ist formen- und prozesstechnisch schwierig und bedeutet erheblichen Materialmehraufwand, lässt jedoch das Schwächungsproblem nicht zufriedenstellend lösen. Diese Maßnahmen sind nicht nur aufwändig und teuer, sondern stellen nur einen Kompromiss zur Kompensation der Schwächung dar. Die Schwächung durch die Domöffnung ist z.B. kritisch im Hinblick auf den Innendruck des gefüllten Tanks oder/und des Erddrucks oder Winddrucks von außen.

Bei einem aus DE 195 43 524 C bekannten Tank ist die Domöffnung durch einen integral geformten kragenartigen Dom-Öffnungsrand eingefasst, der entweder in eine Öffnung des Tankkörpers eingeschweißt oder mit der Wand des Tankkörpers einstückig geformt ist. Über den Dom-Öffnungsrand wird ein Aufsatzstück geschoben, das mit einer innenliegenden Dichtung abgedichtet und durch Befestigungsschrauben am Dom-Öffnungsrand fixiert ist.

Bei einem aus DE 1 953 487 A bekannten Heizöl-Tank aus glasfaserverstärktem Kunststoff ist in die Tankwand eine Öffnung eingeschnitten, unterhalb derer ein innenliegender Ring aus Stahl als Gegenhalter für einen in die Öffnung eingesetzten Flansch dient und mit diesem über eine Gewindeverbindung verschraubt ist. Der Ring wird gegen die Unterseite der Wand des Tankkörpers gespannt und mit dieser verklebt.

Aus EP 2 113 372 A ist es bekannt, den inneren Laufring eines Wälzlagers in einen zylindrischen Hülsenteil aus thermoplastischem Kunststoff einzubetten. In zumindest einer Seitenflanke des Innenlaufringes ist eine umlaufende Nut mit U-förmigem Querschnitt eingeformt, in die ein Teil des thermoplastischen Kunststoffes eingedrungen ist und sich in der Umfangsnut verzahnt. Beim Abkühlen und Verfestigen des thermoplastischen Kunststoffes schrumpft dieser in radialer Richtung, so dass der Kunststoffhülsenkörper über den formschlüssigen Eingriff in die Ringnut eine radial einwärts gerichtete mechanische Vorspannkraft erzeugt. Gleichzeitig entfernen sich die Kontaktflächen zwischen den Innenumfang des Innenlaufringes und einem Grund einer Umfangsnut im Hülsenbauteil voneinander unter Bildung eines radialen Spaltes.

Der Erfindung liegt die Aufgabe zugrunde, einen Tank der Eingangs genannten Art anzugeben, der auf prozesstechnisch einfache und kostengünstige Weise auch im Bereich einer relativ großen Domöffnung ausreichende Stabilität besitzt.

Die gestellte Aufgabe wird mit den Merkmalen des Patentanspruchs 1 gelöst.

Durch den im Öffnungsrand der Domöffnung innen angeordneten Armierungsring wird eine selbst durch eine relativ große Domöffnung hervorgerufene Schwächung des Tanks kompensiert, bzw. wird der Tank in diesem Bereich mindestens so formstabil und verformungsstabil wie in Wandbereichen ohne Domöffnung. Der Armierungsring und seine Anbringung sind kostengünstig und beeinträchtigen die Funktionalität des Kunststofftanks nicht. Der Armierungsring erfüllt sogar außer der Versteifungsfunktion noch eine weitere Funktion im Tank, nämlich als Träger eines Dichtungsrings. Bei der Herstellung des Tanks, unabhängig davon, ob er monolithisch oder aus Tanksegmenten gefertigt wird, benötigt die Domöffnung keine speziellen Gestaltungsmaßnahmen zur Versteifung, was die Herstellungskosten des Tanks positiv beeinflusst. Auch das ästhetische Erscheinungsbild des Tanks wird durch den innen angeordneten Armierungsring nicht beeinträchtigt. Der Armierungsring dient in der Domöffnung als Träger einer Ringdichtung. Somit erfüllt der Armierungsring zumindest eine Doppelfunktion. Ein Armierungsring könnte auch in einem anderen, herstellungsbedingt geschwächten Bereich des Tanks integriert sein. Hierbei ist entweder der Kunststoff des Öffnungsrandes auf den Armierungsring aufgeschrumpft, so dass der Armierungsring als voll integrierter Teil des Tanks seine Versteifungsfunktion zu erfüllen vermag, oder ist der Armierungsring gegebenenfalls nicht nur durch einen Schrumpfprozess festgelegt, sondern auch formschlüssig, indem innen im Öffnungsrand eine umlaufende Nut vorgesehen wird, in welcher der Armierungsring Platz findet, zumindest mit einem Teil seines Querschnitts. Das Aufschrumpfen ist herstellungstechnisch einfach und kostengünstig. Die Nut wird entweder formtechnisch geformt, oder nachträglich präzise gefräst.

Bevorzugt ist der Armierungsring durch Kristallisation des Kunststoffes nach der Fertigung des Tanks oder des Tanksegments positioniert und kraftübertragend eingegliedert. Solche Kunststofftanks schrumpfen nämlich üblicherweise um bis zu etwa 3 %, und zwar beim Kristallisationsprozess noch in der Form um ca. 1 %, und nach Entnahme aus der Form um weitere etwa 2 %. Diese Schrumpfung wird genutzt, indem entweder noch in der Form oder nach Entnahme aus der Form der Armierungsring eingebracht und nachfolgend selbsttätig festgelegt ist.

Bei einer zweckmäßigen Ausführungsform besteht der Armierungsring aus Stahl oder einem Metall genügender Festigkeit. Speziell ein Ring aus Stahl, z.B. Edelstahl, wird aus Korrosionsschutzgründen, vorzugsweise, oberflächenbehandelt, wie pulverbeschichtet. Dies schließt jedoch nicht aus, den Armierungsring aus anderen Materialien, z.B. festen oder hochfesten oder faserverstärkten Kunststoffverbundmaterialien oder dergleichen auszubilden. Aus Gewichtsgründen kann es zweckmäßig sein, den Armierungsring aus einem Hohlprofil zu formen, beispielsweise aus einem geschweißten Vierkantprofil, noch bevorzugter sogar aus einem quadratischen Vierkantprofil. Jedoch sind auch andere geometrische Querschnittsformen des Armierungsrings in adäquater Weise verwendbar.

Die vom Armierungsring mitgetragene Ringdichtung ist vorzugsweise eine Lippendichtung, die eine Öffnungsrandkante der Domöffnung und zumindest die zum Inneren der Domöffnung weisende Seite des Armierungsrings überdeckt. Der Armierungsring erleichtert auch das Einknüpfen der Ringdichtung.

Bei einer zweckmäßigen Ausführungsform ist in die Domöffnung ein Ende eines Aufsatzstücks eingesteckt, typischerweise eines konischen oder zylindrischen Tankdoms, das sich mit einem Flansch über die Ringdichtung auf der Öffnungsrandkante abstützen kann. Um das Einstecken des Aufsatzstücks nicht zu behindern, wird zwischen dem Armierungsring und dem Ende des Aufsatzstücks ein Ringspalt gebildet, der jedoch durch die zwischen dem Armierungsring und dem Ende komprimierte Ringdichtung abgedichtet ist, derart, dass sich beispielsweise das Aufsatzstück in der Domöffnung in die jeweils gewünschte Drehposition verdrehen lässt und dann in dieser Drehposition festgehalten wird.

Bei einer zweckmäßigen Ausführungsform ist zwischen jeweils zwei aneinanderstoßenden, verschweißten Tanksegmenten bzw. deren Tanksegmentöffnungsrändern angrenzend an den durch den Armierungsrand ausgesteiften Dom-Öffnungsrand eine nach außen offene, umlaufende, annähernd V-förmig Schweißkehle durch eine extrudierte Kunststoff-Schweißraupe verschweißt ist. Die Kunststoff-Schweißraupe bildet in der Schweißkehle eine homogene, dichte und feste Schweißnaht. Die Schweißraupe ist beispielsweise in die entweder noch plastische oder beispielsweise mittels einer Heißluftpistole oberflächlich angeschmolzene Schweißkehle extrudiert, wobei entweder der Tank und/oder der Extruder und die Heißluftpistole um die Zylinderachse des Tanks rotiert wird bzw. werden.

Eine weitere Erhöhung der Stabilität im Bereich der Schweißnaht ist zweckmäßig dadurch möglich, dass am Grund der Schweißkehle ein Innenflansch eines Öffnungsrandes des einen Tanksegments armierend unter eine Öffnungsrandkante des anderen Tanksegments eingesteckt ist. Alternativ könnten mit entsprechend unterschiedlichen Durchmessern gestaltete Innenflansche beider Tanksegmente teleskopartig ineinandergesteckt sein.

Bei einer weiteren, zweckmäßigen Ausführungsform des aus Tanksegmenten gefügten Tanks ist zwischen zumindest zwei Tanksegmenten eine Kunststoff-Trennwand eingesetzt, wobei zwischen dem Außenumfang der Trennwand und den beiden an die Trennwand anstoßenden Tanksegmenten zwei umlaufende, nach außen offene, annähernd V-förmige Schweißkehlen geformt sind, die jeweils durch eine extrudierte Schweißraupe aus Kunststoff verschweißt sind. Entsprechend einer Gleichteilephilosophie können die gleichartigen Tanksegmente entweder direkt miteinander verschweißt werden, oder über die dazwischen eingesetzte Trennwand. Eine solche Trennwand ist beispielsweise in Tanks für abwassertechnische Zwecke erforderlich.

Um auch bei einer vorgesehenen Trennwand den Schweißbereich zu stabilisieren, kann es zweckmäßig sein, am Grund der einen Schweißkehle einen Innenflansch eines Öffnungsrandes des einen Tanksegments unter eine Innenschulter der Trennwand einzustecken, und am Grund der anderen Schweißkehle an der anderen Seite der Trennwand eine Öffnungsrandkante des anderen Tanksegments auf eine Außenschulter der Trennwand aufzustecken. Auf diese Weise wirken in den Schweißbereichen auch formschlüssig einander hintergreifenden Flächen zwischen den Tanksegmenten und der Trennwand stabilisierend.

Eine für unterschiedliche Tankgrößen und zum Beispiel standardisierte Domöffnungen passende Armierungsringgröße kann ein Eckmaß von etwa 25 mm bei einer Wandstärke von etwa 2 mm aufweisen, und besteht beispielsweise aus einem quadratisches Vierkantprofil aus Stahl.

Anhand der Zeichnung werden Ausführungsformen des Erfindungsgegenstandes erläutert. Es zeigen:
- Fig. 1: eine Perspektivansicht eines Kunststoff-Tanks mit einem Tankdom,
- Fig. 2: einen Schnitt in der Tanköffnung zur Verdeutlichung eines integrierten Armierungsrings in der Domöffnung,
- Fig. 3: eine Perspektivansicht einer anderen Ausführungsform des Tanks, der aus mehreren Tanksegmenten durch Verschweißen gefügt ist und wenigstens einen Tankdom aufweist,
- Fig. 4: einen Schnitt eines Schweißbereiches zweier aneinanderstoßender Tanksegmente des Tanks von Fig. 3, und
- Fig. 5: einen Schnitt eines Schweißbereiches des Tanks von Fig. 3, wobei zwischen zwei Tanksegmenten eine Trennwand eingeschweißt ist.

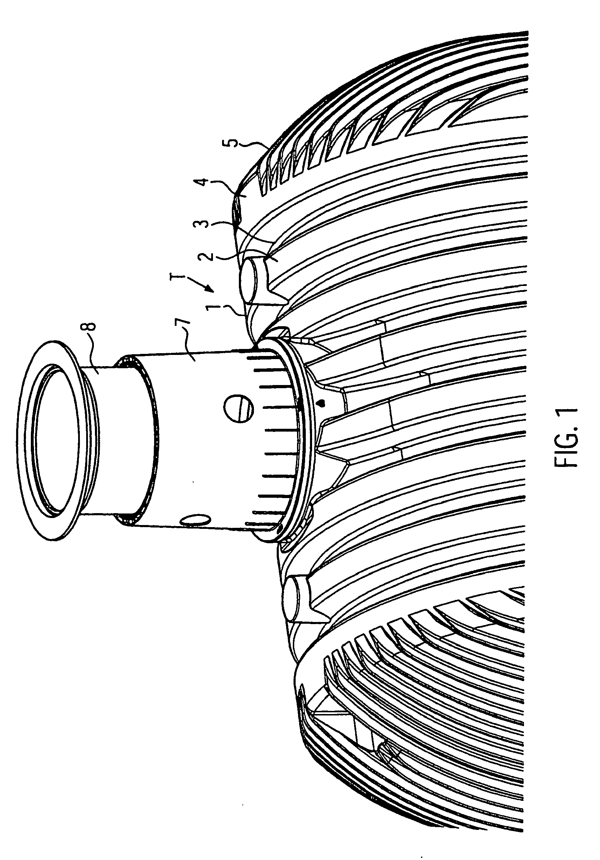

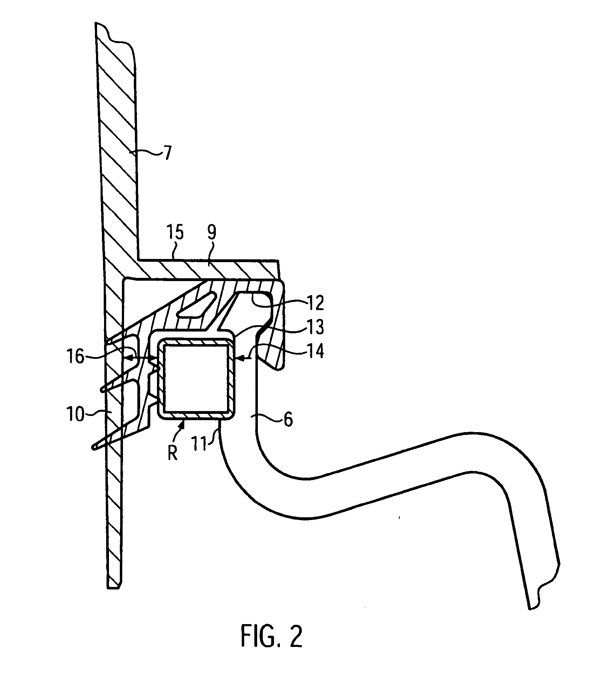

Ein in Fig. 1 nur teilweise gezeigter Tank T ist beispielsweise in einer Rotationsgießform aus Kunststoff mit im Wesentlichen kontinuierlicher Wandstärke und monolithisch hergestellt und weist eine allgemein zylindrische Form mit beidendigen, nach außen bombierten Tankböden 4 auf. Ein Zylinderwandbereich 1 des Tanks T ist mit parallelen, umlaufenden Umfangsrippen 2 und dazwischenliegenden Nuten 3 ausgebildet, um die Formstabilität zu erhöhen. Die Tankböden 4 sind mit zueinander parallelen Querrippen und Nuten stabilisiert. Zum Beispiel im zylindrischen Wandbereich 1 ist einstückig ein umlaufender, kragenartiger Öffnungsrand 6 einer Domöffnung 11 (Fig. 2) geformt, in die nachträglich ein Aufsatzstück 7 eines Tankdoms eingesteckt ist. Ein weiterer Teleskopteil 8 ermöglicht eine Höhenanpassung des Zugangs zum Tank T an die baulichen Gegebenheiten.

Gemäß Fig. 2 ist die Domöffnung 11 im Öffnungsrand 6 innen durch einen Armierungsring R stabilisiert, der hier im Abstand von einer Öffnungsrandkante 12 des Öffnungsrandes 6 installiert ist. Das Aufsatzstück 7 ist mit einem Ende 10 in die Domöffnung 11 eingesteckt und stützt sich mit einem Außenflansch 9 beispielsweise über eine Ringdichtung 15 auf der Öffnungsrandkante 12 ab. Die Ringdichtung 15 ist beispielsweise eine Lippendichtung, für die der Armierungsring R als Träger fungieren kann und übergreift die Öffnungsrandkante 12 und füllt im komprimierten Zustand einen Ringspalt 16 abdichtend aus, der zwischen dem Ende 10 und dem Armierungsring R gebildet ist. In der gezeigten Ausführungsform ist der Armierungsring R formschlüssig in einer Nut 13 in der Innenseite des Öffnungsrandes 6 positioniert. Die Nut 13 ist entweder bei der Herstellung des Tanks mitgeformt oder nachträglich hergestellt, beispielsweise gefräst, und zwar entsprechend eines Teils des Querschnitts des Armierungsrings R.

In der gezeigten Ausführungsform in Fig. 2 ist der Armierungsring R ein hohles Vierkantprofil, beispielsweise mit quadratischem Außenumriss, einem Eckmaß von etwa 25 mm und einer Wandstärke von etwa 2 mm. Der Armierungsring R kann aus Stahl oder einem anderen Metall bestehen und an der Oberfläche korrosionsschützend behandelt sein, z.B. durch eine Pulverbeschichtung. Der Armierungsring R könnte alternativ jegliche andere Querschnittsform haben und könnte auch aus Vollmaterial bestehen. Ferner kann der Armierungsring R aus einem Kunststoff-, faserverstärktem Kunststoff- oder einem VerbundMaterial bestehen, das höhere Festigkeit hat als der Kunststoff des Tanks T bzw. des Öffnungsrandes 6.

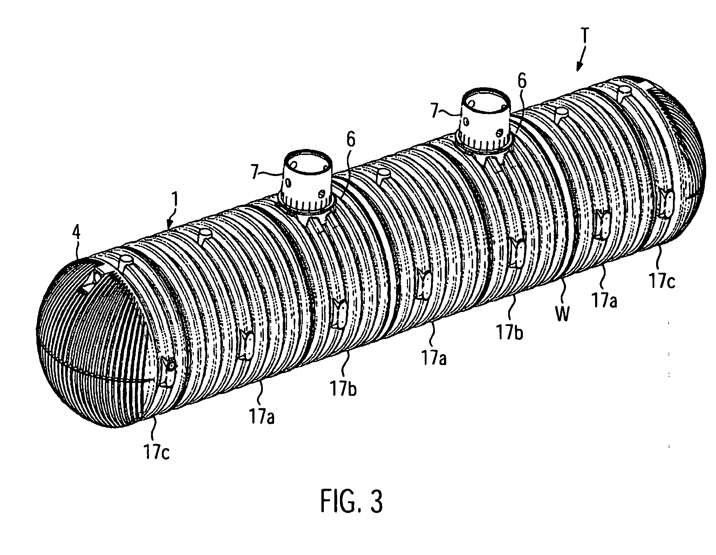

Zweckmäßig wird der Armierungsring R festgelegt, indem der Kristallisationsprozess des Kunststoffes nach der Herstellung des Tanks T (bzw. eines Tanksegments in der Ausführungsform der Fig. 3 bis 5) genutzt wird, bei dem der Öffnungsrand 6 schrumpft. Bereits in der Herstellungsform tritt eine Schrumpfung von etwa 1 % ein, und nach der Entnahme aus der Herstellungsform schrumpft der Öffnungsrand 6 noch beispielsweise um 2 %. Der Armierungsring R wird entweder bereits in der Herstellungsform eingelegt, oder nach der Entnahme des Tanks oder Tanksegments aus der Herstellungsform, wobei anschließend der Kunststoff des Öffnungsrandes 6 auf den Armierungsring R aufschrumpft, so dass dieser zu einem voll integrierten, Kraft übertragenden Teil des Tanks in der Domöffnung 11 wird. Die Nut 13 ist eine Option. Der Öffnungsrand 6 könnte innenseitig auch ohne Bearbeitung zum Aufschrumpfen auf den Armierungsring R genutzt werden. Beispielsweise bräuchte nur eine Schulter oder wenigstens ein Vorsprung an der Innenseite des Öffnungsrandes 6 geformt zu werden, auf die bzw. den der Armierungsring R zunächst lose aufgelegt wird, ehe der Öffnungsrand 6 beim Kristallisationsprozess des Kunststoffes auf den Armierungsring R aufschrumpft. Alternativ könnte der Armierungsring R auch eingeklebt oder eingepresst werden, nach dem Kristallisationsprozess abgeschlossen ist. Entscheidend ist, dass der Armierungsring R so im Öffnungsrand 6 innen positioniert wird, dass er die durch die Domöffnung 11 bedingte Schwächung dieses Bereiches des Tanks T oder Tanksegments kompensiert.

Das in Fig. 2 gezeigte Prinzip der Stabilisierung der Domöffnung ist auch bei der Ausführungsform des Tanks in den Fig. 3 bis 5 zweckmäßig. Der Tank T in den Fig. 3 bis 5 ist ein Großtank beispielsweise für ein Fassungsvermögen bis zu 100000 Liter, und ist größenbedingt aus mehreren vorgefertigten Tanksegmenten 17a, 17b, 17c durch Schweißen oder Kleben gefügt. In der Ausführungsform in Fig. 3 besteht der Tank T aus drei ringförmigen, zumindest in etwa gleichlangen Tanksegmenten 17a, zwei ringförmigen, in etwa gleichlangen, aber kürzeren Tanksegmenten 17b, und zwei Tanksegmenten 17c, die als bombierte Tankböden 4 ausgebildet sind. Die Verrippung des Tanks T in den Fig. 3 bis 5 kann ähnlich oder gleich sein wie beim Tank T in Fig. 1. Zumindest ein Tanksegment 17b weist einen Tankdom mit einem Öffnungsrand 6 in der Zylinderwand auf, wobei, zweckmäßig, im Öffnungsrand 6 innen zumindest ein Armierungsrand R entsprechend Fig. 2 angebracht ist, um die durch die Domöffnung bedingte Schwächung zu kompensieren. In den Öffnungsrand 6 kann ein Aufsatzteil 7 analog zu Fig. 1 eingesteckt sein.

Ferner ist in Fig. 3 als Option angedeutet, dass zwischen zumindest zwei Tanksegmenten (hier Tanksegmente 17a und 17b) eine Trennwand W in den Tank T integriert sein kann.

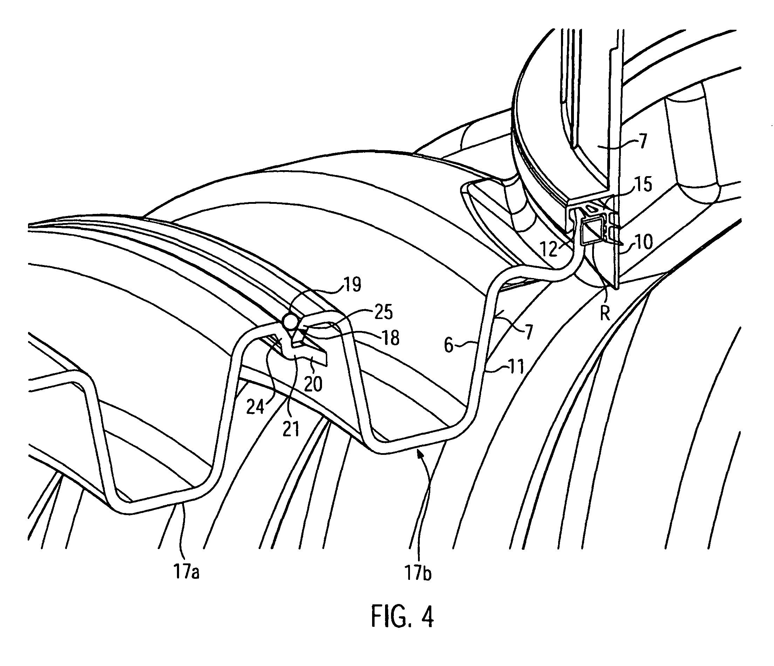

Fig. 4 verdeutlicht einen möglichen Schweißbereich zwischen den Tanksegmenten 17a und 17b, beispielsweise angrenzend an den Öffnungsrand 6 der Domöffnung 11, in die das Aufsatzstück 7 mit dem Ende 10 eingesteckt ist, analog zu Fig. 2, wobei der Armierungsring R und die Ringdichtung 15 vorgesehen sind.

Im Schweißbereich ist hier eine umlaufende, nach außen offene, annähernd V-förmige Schweißkehle 18 gebildet, die durch eine Kunststoff-Schweißraupe 19 verschweißt ist. Die Kunststoff-Schweißraupe 19 wird beispielsweise mittels eines Extruders erzeugt und in die Schweißkehle 18 eingebracht, die, zweckmäßig, dabei zumindest oberflächlich plastifiziert wird, beispielsweise mittels einer Heißluftpistole. Beim Schweißen wird entweder der Tank um die Zylinderachse rotiert und/oder der Extruder bzw. die Heißluftpistole.

Die Schweißkehle 18 wird durch schräge Endwände 24, 25 der Tanksegmente 17a, 17b definiert. Am Grund der Schweißkehle 18 ist zur Stabilisierung ein Innenflansch 21 des Tanksegments 17a unter eine innere Öffnungsrandkante 20 des Tanksegments 17b eingesteckt. Die Schweißbereiche zwischen allen direkt miteinander verschweißten, aneinanderstoßenden Tanksegmenten 17a, 17b sind untereinander gleich ausgebildet.

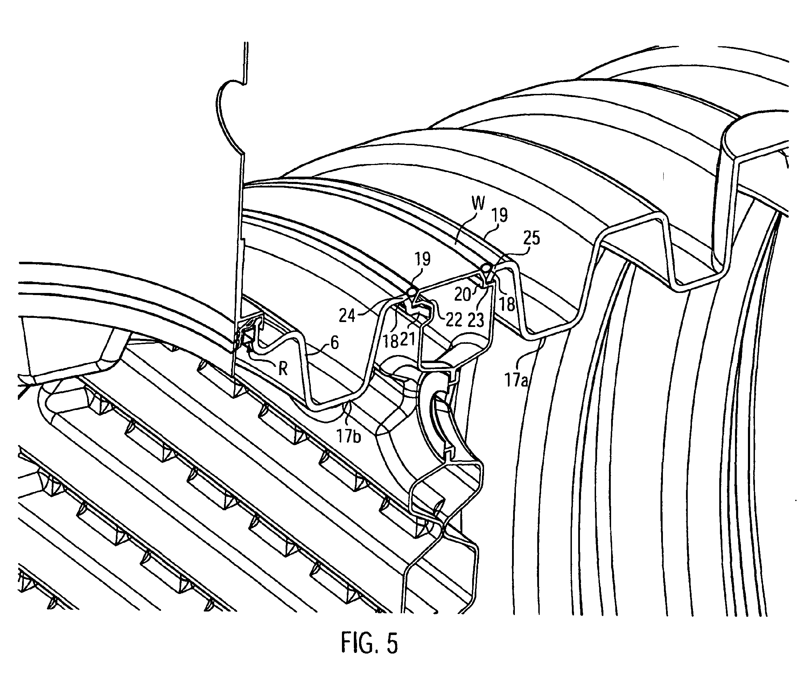

Fig. 5 verdeutlicht schließlich den Schweißbereich bei der integrierten Trennwand W, Fig. 3, dort beispielsweise zwischen dem rechtsseitigen Tanksegment 17b und dem rechtsseitigen Tanksegment 17a. Die beiden Schweißbereiche an der Trennwand W sind analog zum in Fig. 4 gezeigten Schweißbereich ausgebildet.

In Fig. 5 ist die Trennwand W mit Hohlkammern doppelwandig ausgebildet und beispielsweise angrenzend an den Öffnungsrand 6, der durch den Armierungsring R ausgesteift ist, in den Tank T integriert. Die Tanksegmente 17a, 17b sind gleich ausgebildet wie in den Fig. 3 und 4, d.h., zwischen der Trennwand W und den beiden Tanksegmenten 17a, 17b werden zwei umlaufende, nach außen offene, annähernd V-förmige Schweißkehlen 18 gebildet, die durch eine Kunststoff-Schweißraupe 19 verschweißt sind. Die Schweißkehle 18 wird durch den schrägen Wandabschnitt 24 und einen schrägen Wandabschnitt 26 der Trennwand W bzw. den schrägen Wandabschnitt 25 und einen schrägen Wandabschnitt 26 der Trennwand W definiert. Der Innenflansch 21 des Tanksegments 17b ist unter eine Innenschulter 22 der Trennwand W eingesteckt, um eine zusätzliche Stabilisierung zu erzeugen. Hingegen ist die innere Öffnungsrandkante 20 des Tanksegments 17a auf eine Außenschulter 23 der Trennwand W aufgesteckt. Zur Erstellung des Tanks T in Fig. 3, unabhängig davon, ob zumindest eine Trennwand W integriert wird, oder nicht, können demzufolge dieselben Tanksegmente 17a, 17b verwendet werden.

Die Schweißbereiche könnten alternativ durch Infrarot- oder Laser- oder Spiegelschweißen, mit oder ohne Schweißhilfsmaterial hergestellt sein.

## Patentansprüche

1. Tank (T) aus Kunststoff, der zumindest im Wesentlichen zylindrisch und entweder mit wenigstens einer durch einen integral geformten, kragenartigen Domöffnungsrand (6) eingefassten Domöffnung (11) und beidendigen Tankböden (4) monolithisch oder aus aneinanderstoßenden, verschweißten Tanksegmenten (17a, 17b, 17c) geformt ist, wobei zumindest ein Tanksegment (17b) eine durch eine integral geformten, kragenartigen Domöffnungsrand (6) eingefasste Domöffnung (11) aufweist, wobei zumindest die Domöffnung (11) innen im Dom-Öffnungsrand (6) durch wenigstens einen Armierungsring (R) aus einem Material höherer Festigkeit als die des Kunststoffes des Tanks (T) ausgesteift ist, **dadurch gekennzeichnet, dass** der Kunststoff des kragenartigen Öffnungsrandes (6) auf den Armierungsring (R) aufgeschrumpft und/oder innen im kragenartigen Öffnungsrand (6) eine umlaufende Nut (13) geformt ist, in der der Armierungsring (R) zumindest mit einem Teil seines Querschnittes formschlüssig positioniert ist, und dass der Armierungsring (R) in der Domöffnung (11) eine Ringdichtung (15) trägt.

2. Tank nach Anspruch 1, **dadurch gekennzeichnet, dass** auf den Armierungsring (R) aufgeschrumpfter Kunststoff des Öffnungsrandes (6) abkühlungskristallisiert ist.

3. Tank nach Anspruch 1, **dadurch gekennzeichnet, dass** der Armierungsring (R) aus Metall, wie Stahl und/oder Kunststoff und/oder einem Verbundmaterial besteht, und, vorzugsweise, pulverbeschichtet ist.

4. Tank nach Anspruch 1, **dadurch gekennzeichnet, dass** der Armierungsring (R) entweder aus Vollmaterial oder aus einem Hohlprofil geformt ist, vorzugsweise aus einem Vierkant-Hohlprofil.

5. Tank nach Anspruch 1, **dadurch gekennzeichnet, dass** die Ringdichtung eine die Öffnungsrandkante (12) und zumindest die zum Inneren des Öffnungsrandes (6) weisende Seite des Armierungsringes (R) überdeckende Lippendichtung ist.

6. Tank nach Anspruch 1, **dadurch gekennzeichnet, dass** in die Domöffnung (11) ein Ende (10) eines Aufsatzstücks (7) eingesteckt ist, das sich mit einem Außenflansch (9) über die Ringdichtung (15) auf der Öffnungsrandkante (12) abstützt und mit dem Ende (10) zum Armierungsring (R) einen Ringspalt (16) bildet, der durch die zwischen dem Armierungsring (R) und dem Ende (10) komprimierte Ringdichtung (15) abgedichtet ist.

7. Tank nach Anspruch 1, **dadurch gekennzeichnet, dass** zwischen jeweils zwei aneinanderstoßenden, verschweißten Tanksegmenten (17a, 17b, 17c), von denen zumindest eines die wenigstens eine Domöffnung (11) mit dem integral geformten, kragenartigen und innen durch den wenigstens einen Armierungsring (R) ausgesteiften Dom-Öffnungsrand (6) aufweist, eine nach außen offene, angrenzend an den ausgesteiften Dom-Öffnungsrand (6) umlaufende, annähernd V-förmige Schweißkehle (18) durch eine extrudierte Kunststoff-Schweißraupe (19) verschweißt ist.

8. Tank nach Anspruch 7, **dadurch gekennzeichnet, dass** am Grund der Schweißkehle (18) ein Innenflansch (21) eines Öffnungsrandes des einen Tanksegments (17a) unter eine Öffnungsrandkante (20) des anderen Tanksegments (17b) eingesteckt ist.

9. Tank nach Anspruch 7, **dadurch gekennzeichnet, dass** in den Tanke (T) zwischen zumindest zwei Tanksegmenten (17a, 17b, 17c) eine Kunststoff-Trennwand (W) eingesetzt ist, und dass zwischen dem Außenumfang der Trennwand (W) und den beiden Tanksegmenten (17a, 17b, 17c) zwei umlaufende, nach außen offene, annähernd V-förmige Schweißkehlen (18) jeweils durch eine extrudierte Kunststoffschweißraupe (19) verschweißt sind.

10. Tank nach Anspruch 9, **dadurch gekennzeichnet, dass** am Grund der einen Schweißkehle (18) ein Innenflansch (21) eines Öffnungsrandes des einen Tanksegments (17a) unter eine Innenschulter (22) der Trennwand (W) eingesteckt ist, und dass am Grund der andere Schweißkehle (18) auf eine Außenschulter (23) der Trennwand (W) eine Öffnungsrandkante (20) des anderen Tanksegments (17a) aufgesteckt ist.

## Claims

1. Tank (T) made from a plastic material, which tank is formed at least substantially cylindrical with tank bottoms (4) at both ends either monolithically with at least one dome opening (11) surrounded by an integrally formed collar-like dome opening edge (6) or from abutting and welded together tank segments (17a, 17b, 17c) among which at least one tank segment (17b) comprises a dome opening (11) surrounded by an integrally formed collar-like dome opening edge (6), at least the dome opening (11) inside in the dome opening edge (6) being stiffened by at least one reinforcement ring (R) made from a material of higher strength than the strength of the plastic material of the tank (T), **characterized in that** the plastic material of the collar-like opening edge (6) is shrunk on the reinforcement ring (R) and/or that inside in the collar-like opening edge (6) a circumferential groove (13) is formed in which the reinforcement ring (R) at least with a part of its cross-section is positioned with a form-fit, and that in the dome opening (11) the reinforcement ring (R) carries a ring sealing (15).

2. Tank according to claim 1, **characterized in that** the plastic material of the opening edge (6) as shrunk on the reinforcement ring (R) is crystallized by cooling.

3. Tank according to claim 1, **characterized in that** the reinforcement ring (R) consists of metal like steel and/or plastic material and/or a compound material, and, preferably, is powder coated.

4. Tank according to claim 1, **characterized in that** the reinforcement ring (R) is formed either from solid material or from a hollow profile, preferably from a rectangular hollow profile.

5. Tank according to claim 1, **characterized in that** the ring sealing (15) is a lip sealing covering an edge (12) of the opening edge and at least the side of the reinforcement ring (R) facing to the interior of the opening edge (6).

6. Tank according to claim 1, **characterized in that** one end (10) of a top piece (7) is inserted into the dome opening (11), which end (10) is supported with an exterior flange (9) via the ring sealing (15) on the edge (12) of the opening edge and forms an annular gap (16) with the reinforcement ring (R), the annular gap (16) being sealed by the ring sealing (15), such that the ring sealing (15) is compressed between the reinforcement ring (R) and the end (10).

7. Tank according to claim 1, **characterized in that** between respective two abutting, welded together tank segments (17a, 17b, 17c), among which at least one tank segment comprises the at least one dome opening (11) having the integrally formed collar-like dome opening edge (6) stiffened inside by the at least one reinforcement ring (R), an outwardly open substantially V-shaped welding groove (18), extending adjacent to the stiffened dome opening edge (6) is welded by an extruded plastic material welding bead (19).

8. Tank according to claim 7, **characterized in that** at the bottom of the welding groove (18) an inner flange (21) of an opening edge of the one tank segment (17a) is inserted underneath an opening edge (20) of the other tank segment (17b).

9. Tank according to claim 7, **characterized in that** a plastic material separation wall (W) is inserted in the tank (T) between at least two tank segments (17a, 17b, 17c) and that between the outer circumference of the separation wall (W) and both tank segments (17a, 17b, 17c) two circumferentially continuous, outwardly open, substantially V-shaped welding grooves (18) are welded respectively by an extruded plastic material welding bead (19).

10. Tank according to claim 9, **characterized in that** at the bottom of the one of the welding grooves (18) an inner flange (21) of an opening edge of the one tank segment (17a) is inserted underneath an inner shoulder (22) of the separation wall (W), and that at the bottom of the other welding groove (18) an opening edge (20) of the other tank segment (17a) is put on an outer shoulder (23) of the separation wall (W).

## Revendications

1. Réservoir (T) en plastique conformé de manière au moins sensiblement cylindrique, et soit monolithique avec au moins une ouverture à dôme (11) entourée par un bord d'ouverture à dôme (6) à col constitué de manière intégrée, ainsi que des fonds de réservoir (4) aux deux extrémités, soit constitué de segments de réservoir (17a, 17b, 17c) emboîtés les uns dans les autres et soudés, dans lequel au moins un segment de réservoir (17b) comporte une ouverture à dôme (11) entourée par un bord d'ouverture à dôme (6) à col constitué de manière intégrée, dans lequel au moins l'ouverture à dôme (11) est rigidifiée à l'intérieur du bord d'ouverture à dôme (6) par au moins un anneau de renforcement (R) en un matériau à rigidité supérieure à celle du plastique du réservoir (T), **caractérisé en ce que** le plastique du bord d'ouverture en forme de col (6) est serti sur l'anneau de renforcement (R) et/ou **en ce qu'**une cannelure circonférentielle (13) est formée dans le bord d'ouverture (6) en forme de col, dans laquelle l'anneau de renforcement (R) est positionné par engagement de forme au moins sur une partie de sa section transversale, et **en ce que** l'anneau de renforcement (R) comporte un joint d'étanchéité annulaire (15) dans l'ouverture à dôme (11).

2. Réservoir selon la revendication 1, **caractérisé en ce que** le plastique du bord d'ouverture (6) serti sur l'anneau de renforcement (R) est cristallisé par refroidissement.

3. Réservoir selon la revendication 1, **caractérisé en ce que** l'anneau de renforcement (R) est réalisé dans un métal tel que l'acier, en plastique et/ou en matériau composite, et est préférablement peint à la poudre.

4. Réservoir selon la revendication 1, **caractérisé en ce que** l'anneau de renforcement (R) est formé soit en un matériau plein, soit à partir d'un profilé creux, préférablement un profilé creux carré.

5. Réservoir selon la revendication 1, **caractérisé en ce que** le joint d'étanchéité annulaire est une étanchéité à lèvre chevauchant l'arrête du bord d'ouverture (12) et au moins le côté de l'anneau de renforcement (R) orienté vers l'intérieur du bord d'ouverture (6).

6. Réservoir selon la revendication 1, **caractérisé en ce qu'**une extrémité (10) d'une pièce rapportée (7), qui est posée à l'aide d'une bride externe (9) sur le joint d'étanchéité annulaire (15) sur le bord d'ouverture (12), est enfoncée dans l'ouverture à dôme (11) et constitue avec l'extrémité (10) vers l'anneau de renforcement (R) un intervalle annulaire (16) qui est rendu étanche par le joint d'étanchéité annulaire (15) comprimé entre l'anneau de renforcement (R) et l'extrémité (10).

7. Réservoir selon la revendication 1, **caractérisé en ce qu'**entre deux segments de réservoir (17a, 17b, 17c) respectifs emboîtés les uns dans les autres et soudés, dont au moins un comporte ladite au moins une ouverture à dôme (11) avec le bord d'ouverture à dôme (6) constitué de manière intégrée à forme de col et rigidifié à l'intérieur par ledit au moins un anneau de renforcement (R), une gorge de soudure (18) ouverte sur l'extérieur, adjacente au bord d'ouverture à dôme rigidifié (6), circonférentielle et dont la forme s'approche d'un V est soudée à l'aide d'un cordon de soudure en plastique extrudé (19).

8. Réservoir selon la revendication 7, **caractérisé en ce que**, dans le fond de la gorge de soudure (18), une bride interne (21) d'un bord d'ouverture dudit un segment de réservoir (17a) est enfoncée sous un bord d'ouverture (20) de l'autre segment de réservoir (17b).

9. Réservoir selon la revendication 7, **caractérisé en ce qu'**une cloison de séparation en plastique (W) est agencée dans le réservoir (T) entre au moins deux segments de réservoir (17a, 17b, 17c), et **en ce que**, entre la circonférence externe de la cloison de séparation (W) et les deux segments de réservoir (17a, 17b, 17c), deux gorges de soudure (18) circonférentielles, ouvertes sur l'extérieur et dont la forme s'approche d'un V sont respectivement soudées par un cordon de soudure en plastique extrudé (19).

10. Réservoir selon la revendication 9, **caractérisé en ce que** dans le fond de l'une des gorges de soudure (18), une bride interne (21) d'un bord d'ouverture dudit un segment de réservoir (17a) est enfoncée sous un épaulement interne (22) de la cloison de séparation (W), et **en ce que** dans le fond de l'autre gorge de soudure (18), un bord d'ouverture (20) de l'autre segment de réservoir (17a) est enfoncé sur un épaulement externe (23) de la cloison de séparation (W).
